(19) Europäisches Patentamt
European Patent Office
Office européen des brevets

(11) EP 0 731 580 B1

(12) # FASCICULE DE BREVET EUROPEEN

(45) Date de publication et mention de la délivrance du brevet:
**11.10.2006 Bulletin 2006/41**

(51) Int Cl.:
***H04L 9/32*** *(2006.01)*

(21) Numéro de dépôt: **96400470.9**

(22) Date de dépôt: **05.03.1996**

(54) **Procédé de paiement dans une application télématique et dispositif de mise en oeuvre de ce procédé**

Zahlungsverfahren in einer Datenübertragungsanordnung und Anordnung zu dessen Implementierung

Method of payment in a data communications application and device for its implementation

(84) Etats contractants désignés:
**DE FR GB**

(30) Priorité: **07.03.1995 FR 9502637**

(43) Date de publication de la demande:
**11.09.1996 Bulletin 1996/37**

(73) Titulaires:
- **FRANCE TELECOM**
  **75015 Paris (FR)**
- **LA POSTE**
  **92777 Boulogne Billancourt Cédex (FR)**

(72) Inventeurs:
- **Pailles, Jean-Claude**
  **14610 Epron (FR)**
- **Traore, Jacques**
  **14000 Caen (FR)**

(74) Mandataire: **Poulin, Gérard et al**
**BREVALEX**
**3, rue du docteur Lancereaux**
**75008 Paris (FR)**

(56) Documents cités:
**EP-A- 0 518 365** **WO-A-95/04417**

- **ADVANCES IN CRYPTOLOGY - CRYPTO '92 (PROCEEDINGS OF THE 12TH ANNUAL INTERNATIONAL CRYPTOLOGY CONFERENCE), 16 - 20 Août 1992, SANTA BARBARA, CA, US, pages 106-112, XP000470379 R. HIRSCHFELD: "Making Electronic Refunds Safer"**
- **COMPUTERS & SECURITY, vol. 8, no. 5, Août 1989, OXFORD, OXON., GB, pages 399-416, XP000053012 H. BÜRK ET AL: "Digital Payment Systems Enabling Security and Unobservability"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 731 580 B1

## Description

Domaine technique

la présente invention concerne un procédé de paiement dans une application télématique, et un dispositif de mise en oeuvre de ce procédé.

Etat de la technique antérieure

Dans une application télématique, un utilisateur doit payer les prestations que lui délivre un serveur d'application. Des formules d'abonnement indifférencié sont trop simplistes pour être satisfaisantes à cet égard et ne permettent pas de refléter la valeur des informations fournies à un utilisateur pour une transaction particulière. Par ailleurs, l'obligation pour un utilisateur d'avoir à faire une démarche d'abonnement auprès de chaque serveur consulté ne favorise pas la spontanéité de ses consommations.

L'infrastructure de paiement ne doit cependant pas être trop coûteuse, eu égard au faible coût des prestations généralement délivrées. Ceci écarte des solutions où le serveur facturerait directement son utilisateur (procédure de paiement ou télépaiement classique). Ceci explique l'intérêt des "serveurs de paiement", ou "kiosques", auxquels les serveurs d'application sous-traitent les opérations de paiement, puis de recouvrement des sommes dues. Ce genre de solutions permet à un utilisateur de se connecter à un serveur d'application sans qu'il ait d'abonnement préalable pour ce serveur, et permet aussi de rendre l'utilisateur anonyme par rapport à ce serveur : le serveur d'application n'a plus à avoir d'information sur l'identité de l'utilisateur.

Un exemple de kiosque se rencontre notamment pour le Minitel (marque déposée) et les numéros d'appel 3615 et 3614. Le kiosque fonctionne alors à la durée : le kiosque multiplie la durée de la connexion utilisateur/serveur par le taux du palier, et impute la somme ainsi obtenue à l'utilisateur.

Pour plus de souplesse, la taxation peut être définie suivant la valeur de l'information fournie par le serveur d'application à l'utilisateur. Pour s'assurer de l'accord de l'utilisateur, la procédure est alors la suivante :

- le serveur d'application demande à l'utilisateur une somme déterminée ;
- l'utilisateur, s'il est d'accord, demande au kiosque de payer cette somme au serveur d'application ;
- le kiosque débite le compte de l'utilisateur de cette somme et crédite celui du serveur d'application de celle-ci ;
- le kiosque renvoie un acquittement au serveur d'application, directement ou par l'intermédiaire de l'utilisateur.

Mais, avec cette approche du paiement, apparaît un problème d'anonymat par rapport au kiosque qui, de par ses fonctions, connaît toutes les pratiques et habitudes des utilisateurs. Même si le kiosque est exploité par une organisation institutionnelle, un problème de manque d'anonymat, et donc d'atteinte à la vie privée de l'individu, se pose alors.

Un document de l'art antérieur intitulé "Untraceable Electronic Cash" de David Chaum, Amos Fiat et Moni Naor (Proceedings of Crypto'88, Lectures Notes in Computer Science, volume 403, Springer Verlag, pages 319 à 327) concerne une solution de paiement anonyme.

Le principe de ce paiement est alors le suivant :

- un utilisateur achète de la monnaie électronique à sa banque ;
- cet utilisateur dépense cette monnaie chez des commerçants ;
- chaque commerçant est collecté par la banque.

Plus précisément, ces échanges peuvent être décrits de la façon suivante : le mot "pièce" désigne une donnée émise par la banque, comprenant une signature électronique et ayant une valeur fixée (1 franc par exemple).

Pour le chargement :

1- L'utilisateur demande à la banque une pièce de 1 franc.

2- La banque débite le compte de l'utilisateur de 1 franc ; la banque envoie à l'utilisateur la pièce. Ces deux étapes peuvent être répétées plusieurs fois, pour avoir plusieurs pièces.

Pour le paiement on a :

3- Le commerçant demande à l'utilisateur m francs.

4- L'utilisateur envoie au commerçant m pièces.

5- Le commerçant vérifie les pièces et stocke celles-ci.

Ultérieurement on a la collecte suivante :

6- le commerçant transmet à la banque les pièces stockées ;

7- la banque vérifie les pièces, cumule les montants et paye le commerçant.

Pour le paiement, deux cas sont décrits dans ce document de l'art antérieur :

- en "Off-Line" : le commerçant et l'utilisateur, lors de la transaction ne sont pas en ligne avec la banque. Pour expliquer comment le commerçant peut s'assurer que la pièce électronique n'a pas déjà été utilisée par l'utilisateur, ou dupliquée par le commerçant, deux méthodes sont proposées :
    - une pièce est utilisable une seule fois, sous peine de révéler à la collecte une information permettant à la banque d'identifier l'utilisateur malhonnête ; ceci est possible grâce à une structure particulière des données de la pièce électronique, et ceci implique que la banque conserve toutes les pièces déjà collectées,

- pour obtenir une sécurité physique, l'utilisateur utilise une carte à puce, objet inviolable, dont le comportement ne peut être modifié par l'utilisateur, et qui ne réutilise jamais la même pièce ;

- en "On-Line" : lors de la transaction entre le commerçant et l'utilisateur, en 5, le commerçant contacte la banque pour savoir si la pièce présentée n'a pas déjà été utilisée. La banque doit là aussi conserver toutes les pièces déjà collectées.

Les transactions ont une valeur inconnue a priori, et donc la banque donne à l'utilisateur des pièces d'un montant prédéterminé, quitte pour l'utilisateur d'en utiliser le nombre qu'il faut pour payer le commerçant. Une telle procédure est donc lourde et présente un problème d'appoint.

Cette solution présente donc de nombreuses différences avec un système utilisant un kiosque.

Dans cette solution, il faut constituer un fichier de toutes les pièces collectées, depuis la création du système de paiement électronique, d'où une lourdeur très grande.

Une demande de brevet WO-A-95/04417 décrit des moyens cryptographiques utilisés par trois types de participants dans un système électronique permettant un transfert protégé d'informations certifiées. Ceci est réalisé par un protocole à signature aveugle en combinaison avec un protocole de test. Le protocole à signature aveugle permet à la partie qui certifie de coder les données en informations certifiées qu'il fournit à une partie qui reçoit, de manière telle qu'elles ne peuvent pas être altérées ou modifiées par cette partie qui reçoit. Le protocole de test permet aux parties de prouver différentes caractéristiques concernant les données codées dans leurs informations certifiées.

Cette demande de brevet rappelle l'état de l'art connu, notamment le concept de signature aveugle dû à Chaum protégé par le brevet US-A-4 759 063. Celui-ci permet d'obtenir et d'utiliser une information signée par une autorité, cette information étant connue de l'utilisateur qui la demande, mais pas de l'autorité. Si cette information représente une pièce électronique, elle doit être utilisée seulement une fois. Rien ne peut empêcher de dupliquer des données informatiques ; il faut donc que la réutilisation d'une pièce électronique déjà utilisée permette de révéler l'identité de l'utilisateur qui a fraudé. Un protocole permettant de signer de façon aveugle une information doit donc contenir de quoi repérer l'utilisateur s'il fraude. Cette information, si elle contient bien de quoi repérer l'utilisateur à qui elle est donnée, est souvent dite "bien formée" dans l'état de l'art. Or "aveuglément" et "bien formée" sont antinomiques a priori. Une méthode dite "cut and choose" permet de résoudre cette apparente contradiction : ne pas connaître une information tout en étant sûr qu'elle possède une certaine propriété.

Dans ladite demande de brevet est énoncé un "restrictive blind signature scheme" plus performant que la méthode "cut and choose" définie plus haut. L'information signée, appelée "credential" est constituée de façon à n'être utilisable qu'une fois. Cette information signée peut aussi être combinée avec une quantité telle que le montant. Tout ceci est applicable à un système de paiement "off-line" de type pièce ou chèque électronique.

Dans le cas d'un paiement par pièces ou chèques, on a alors trois acteurs : la banque B, l'utilisateur U, le commerçant (shop) S. U peut payer par exemple un journal chez un commerçant S, mais U peut aussi payer un fournisseur d'informations S qu'il consulte avec son PC sur INTERNET.

Dans le cas de pièces électroniques, il s'agit d'une transcription électronique des pièces ou billets utilisés dans la vie de tous les jours. Les échanges entres ces différentes parties sont les suivants :

- Rechargement de U (son PC, ou sa carte) avec des pièces qu'il stocke en mémoire : cette procédure se passe entre U et B. Ces pièces ont une valeur figée, par exemple 1$. Le protocole permet de charger une telle pièce, avec la propriété, expliquée plus haut, d'anonymat (signature aveugle), et de vérifier qu'elles sont bien formées : elles contiennent l'identité de U. La banque doit bien sûr connaître cette identification pour débiter le compte de U du montant de pièces achetées par U.
- Paiement par U d'un commerçant S : une fois que U possède des pièces, il peut les utiliser pour des achats. Le protocole est donc une preuve de connaissance non réutilisable que U a dans sa mémoire les données relatives à une pièce 1$. Le paiement est totalement déconnecté du rechargement, qui doit avoir été fait avant, pour que U dispose du montant de pièces nécessaires. Cette procédure ne fait intervenir que U et S.
- Remise de S à B : S a donc accumulé des pièces (ou plutôt des preuves de connaissance de pièces) qui lui ont été données par ses clients. Au moyen d'un protocole (non détaillé dans WO-A-95/04417), il vide les pièces accumulées pour que B crédite son compte d'un montant correspondant. La banque doit procéder à des contrôles de non réutilisation (également non détaillés). Si elle retrouve pour la même pièce plusieurs utilisations (preuves de connaissance), alors un traitement simple permet de retrouver l'identité de U qui avait acheté et dépensé ces pièces.

Dans le cas de chèques électroniques, il s'agit d'une approche légèrement différente de celle des pièces

électroniques. Mais elle utilise des protocoles très voisins. Elle est d'un emploi plus simple. En effet, les pièces ont une valeur fixe (1$ par exemple). Pour payer par exemple 9$, il faut utiliser neuf pièces. Avec les chèques, le montant est défini lors de l'utilisation de la pièce. Dans l'exemple défini ci-dessus U fera donc un seul chèque de 9$.

- U achète un chèque d'un montant maximum M. Ce montant M est inséré dans les informations représentant le chèque (analogue au cas des pièces). Le protocole permet de faire ce chargement de façon très voisine au cas d'une pièce de montant M. M est soustrait du compte de U.
- U utilise pour payer un montant m, demandé par S, un chèque de montant maximum $M \geq m$. Le protocole est très proche du paiement avec une pièce, mais la preuve de connaissance comporte de plus le paramètre m.
- Remise par S des chèques reçus (ou plutôt des preuves de connaissance de ces chèques) à B : processus analogue au cas des pièces.
- Un échange supplémentaire doit avoir lieu entre U et B, pour que U se fasse rembourser sur son compte la différence M-m.

Cette demande de brevet WO-A-95/04417 décrit aussi l'utilisation de modules "tamper resistant", ce qui permet de garantir que U ne pourra utiliser deux fois le même chèque ou la même pièce, de par la constitution de la machine (carte à puce ou PC) contenant ces pièces ou chèques, ainsi que la création de compte anonyme, qui consiste à convenir d'un pseudonyme entre U et B (U ne dévoilant pas son identité à B) .

Par contre la présente invention a pour objet un procédé d'échanges entre un utilisateur, un kiosque et un serveur d'application, résolvant le problème d'anonymat. Cet anonymat est relatif au kiosque et non aux réseaux (il peut y en avoir plusieurs) qui se trouvent entre les utilisateurs et les serveurs. Ces réseaux sont appelés à connaître les adresses réseau de ces différents acteurs. Ces adresses peuvent d'ailleurs varier : c'est par exemple le cas d'un utilisateur qui se déplace.

## Exposé de l'invention

La présente invention est définie par les revendications annexées.

Le présente invention concerne un procédé de paiement, dans une application télématique, de sommes dues par un utilisateur pour des prestations délivrées par un serveur d'application, caractérisé en ce qu'il comprend les étapes suivantes :

- ledit serveur d'application envoie audit utilisateur une demande paiement pour une somme déterminée ;
- ledit utilisateur demande à un serveur de paiement, ou kiosque, donné le paiement de ladite somme déterminée ;
- ledit serveur de paiement débite le compte dudit utilisateur de ladite somme déterminée, et envoie audit utilisateur un chèque électronique correspondant à la somme déterminée ;
- ledit utilisateur vérifie ce chèque électronique, le modifie pour que le serveur de paiement ne le reconnaisse pas, et l'envoie audit serveur d'application ;
- ledit serveur d'application vérifie ce chèque électronique et stocke celui-ci ;

et en ce que, dans des étapes ultérieures :

- ledit serveur d'application transmet audit serveur de paiement au moins un chèque électronique stocké ;
- ledit serveur de paiement vérifie chacun des chèques électroniques reçus et paye audit serveur d'application le montant cumulé de ceux-ci.

Dans le contexte technique des réseaux télématiques et serveurs de paiement ou kiosques, le procédé de l'invention concerne une organisation de la fonction paiement basée sur des "chèques électroniques" dont la constitution de principe est définie. Cette approche permet un anonymat complet des actions de l'utilisateur.

Un "chèque" désigne un ensemble de données électroniques émises par un serveur de paiement. Il comprend une signature électronique et a une valeur déterminée. Avantageusement un chèque contient une information concernant son montant et sa date, ainsi qu'un aléa.

Avantageusement la vérification de la septième l'étape concerne la signature des chèques, la non-présence d'un chèque identique dans le fichier des chèques reçus et la mise à jour de ce fichier avec ce nouveau chèque.

Avantageusement, malgré les traitements préalables, les chèques reçus après l'étape de transmission d'au moins un chèque électronique, stocké par le serveur d'application, au serveur de paiement ne peuvent être corrélés avec ceux envoyés dans l'étape d'envoi d'un chèque électronique par le serveur de paiement à l'utilisateur, grâce à la modification de l'étape d'envoi du chèque au serveur d'application, ce qui permet de garder l'anonymat de l'utilisateur.

Les serveurs d'application peuvent collecter leurs chèques avec une certaine périodicité, par exemple inférieure à la semaine.

Dans une première variante le procédé de l'invention permet de résoudre les litiges éventuels entre paiement et remise de l'information électronique, selon deux moyens, et ceci bien que l'anonymat soit une caractéristique importante d'un tel procédé :

- L'information envoyée par le serveur d'application à l'utilisateur peut être chiffrée. La clé de déchiffrement

est calculée par le kiosque lors du débit du compte de l'utilisateur et envoyée à l'utilisateur. Le serveur d'application signe ce qu'il envoie à l'utilisateur, ainsi paiement et remise sont synchronisés. Ainsi le serveur d'application ne peut plus répudier son envoi à l'utilisateur pour être payé par lui sans lui fournir de service, c'est-à-dire sans lui envoyer une information utilisable. Il protège l'intégrité de ce qu'il envoie (pour éviter que l'utilisateur n'altère l'information dans l'intention de se faire rembourser). Le kiosque est le "juge" qui, en cas de litige, dispose des éléments cryptographiques irréfutables lui permettant de savoir qui est le fautif.

- La remise par le serveur d'application des informations à l'utilisateur se fait après réception du chèque de l'utilisateur, mais le serveur s'engage avant le paiement sur la remise de l'information par une signature électronique. Ceci résout tous les cas de fraude de l'utilisateur. Le serveur d'application ne s'engage sur l'information qu'il va fournir à l'utilisateur, qu'après le paiement, par une signature.
Contrairement au système décrit le document de l'art antérieur cité plus haut, dans cette approche kiosque le chargement et le paiement sont liés, car ils se font en même temps : l'utilisateur, le serveur d'application et le kiosque sont "On-Line". Ceci simplifie le problème de la vérification de la non duplication des pièces par l'utilisateur : un aléa choisi par le serveur d'application empêche l'utilisateur de réutiliser des données de signature du serveur d'application qu'il aurait obtenu auparavant. L'utilisateur connaît le montant demandé par le serveur d'application ; il n'y a plus de problèmes d'appoint.
Le problème de duplication par le serveur d'application de chèques se résout en rajoutant au montant, un horodatage, contrôlé par le kiosque lors de la transaction. Comme les pièces sont consommées juste après avoir été achetées par l'utilisateur du kiosque, alors il suffit pour le kiosque de tester les doublons sur une période égale au temps séparant deux collectes.
L'invention concerne également un dispositif de mise en oeuvre de ce procédé, dans lequel au moins un kiosque, au moins un serveur d'application sont en liaison avec au moins un utilisateur par l'intermédiaire d'un réseau de communication. Les techniques de signature aveugle permettent de laisser apparents dans les informations signées le montant et la date, et amènent une simplification importante par rapport aux techniques habituelles.

Brève description des dessins

- Les figures 1 à 3 illustrent le procédé de l'invention ;
- les figures 4 et 5 illustrent deux procédés de l'art antérieur ;
- les figures 6 et 7 illustrent respectivement deux variantes du procédé de l'invention.

Exposé détaillé de modes de réalisation

Le dispositif de mise en oeuvre du procédé de l'invention, tel que représenté sur la figure 1 comprend un kiosque K, des serveurs d'application Al à Am, et des utilisateurs U1 à Un tous reliés à un réseau de communication.

Ledit procédé est un procédé de paiement dans une application télématique, dans lequel l'anonymat de l'utilisateur vis-à-vis du kiosque est respecté.

Si on désigne par U un des utilisateurs, A un des serveurs d'application et K le kiosque, on peut définir l'anonymat par deux règles :

- règle 1 : le serveur d'application A ne doit pas connaître l'utilisateur U ;
- règle 2 : le kiosque K ne doit pas savoir que l'utilisateur U utilise (ou a utilisé) le serveur A.

Mais ceci ne doit pas empêcher le serveur d'application d'être payé pour les prestations qu'il effectue pour l'utilisateur. La règle 1 n'a bien sûr pas de sens si l'application serveur requiert l'identité de l'utilisateur et si l'utilisateur fournit cette identité. Mais dans le cas le plus général, la règle 1 doit s'appliquer. La règle 2 permet de protéger la vie privée des clients. Elle doit être entendue au sens que le kiosque ne doit avoir aucune possibilité pour reconstituer les identifiants des applications sélectionnées par les utilisateurs.

On considère que l'utilisateur utilise un moyen de paiement non anonyme car, dans le cas contraire, l'anonymat des transactions utilisateur/serveur/kiosque est inhérent au système de paiement utilisé.

Les cas couverts par l'invention sont donc :

- le paiement par carte bancaire ou carte d'abonnement ;
- le simple abonnement : l'utilisateur n'a, pour accéder au kiosque, qu'un mot de passe qui lui a été donné lors de son abonnement au kiosque.

Lors d'une transaction, le kiosque va donc connaître l'utilisateur et son identité idU, c'est-à-dire son numéro de carte bancaire ou son numéro d'abonné à l'opérateur du kiosque.

Il existe alors différents cas de raccordements :

- un premier cas se présente lorsque la fonction passerelle utilisateurs/serveurs (concentration, adaptation des transmissions et protocoles) est confondue avec la fonction kiosque. Ce cas peut être schématisé :

U ——— K ——— A

Dans ce cas, la règle 2 ne peut être satisfaite, puisque le kiosque K doit établir la connexion avec le serveur d'application A, donc connaître son identité ;

- dans un second cas schématisé :

U ——— A ——— K

Le serveur d'application doit établir la connexion avec le kiosque, et si ceci n'implique pas que le kiosque connaisse le serveur d'application, alors cette solution de raccordement n'est pas incompatible avec la règle 2. De même la règle 1 peut être satisfaite, mais comme le serveur d'application se trouve entre l'utilisateur et le kiosque, il faut que les données d'identité de l'utilisateur (idU) soient chiffrées entre l'utilisateur et le kiosque ;

- un troisième cas peut être schématisé :

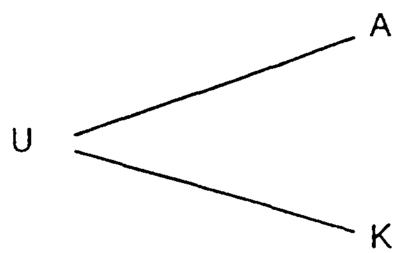


A l'évidence, cette solution est compatible avec les règles 1 et 2. Cette solution n'implique pas deux lignes de transmission différentes issues de l'utilisateur. Une même liaison physique peut contenir plusieurs canaux, chacun avec des destinataires différents. De nombreux réseaux, avec les protocoles de transport adéquats, offrent ces possibilités : Transpac (marque déposée), Itineris (marque déposée) en France....

Dans la suite de la description on se place, à titre d'exemple, dans cette dernière hypothèse de raccordement. Le second cas conviendrait aussi, moyennant de respecter les conditions correspondantes.

Comme représenté sur la figure 2 les échanges selon le procédé de l'invention peuvent être décrits par la succession des étapes suivantes :

1- Le serveur A envoie à l'utilisateur U une demande pour une certaine somme (bloc 11).

2- L'utilisateur U demande au kiosque K cette somme (bloc 12).

3- Le kiosque K débite le compte de l'utilisateur U de cette somme : le kiosque K envoie à l'utilisateur U un chèque électronique de cette somme (bloc 13).

4- L'utilisateur U vérifie ce chèque, le modifie pour que le serveur de paiement ne le reconnaisse pas et l'envoie au serveur d'application A (bloc 14).

5- Le serveur A vérifie et stocke ce chèque (bloc 15).

Ultérieurement (test 18) :

6- Le serveur d'application A transmet au kiosque K les chèques stockés (bloc 16).

7- Le kiosque K vérifie les chèques, cumule les montants et paye le serveur A (bloc 17).

Le mot "chèque électronique", par analogie avec un chèque classique, désigne un ensemble de données électroniques ou numériques émises par le kiosque, comprenant notamment une signature électronique, et ayant une valeur convenue. Il constitue pour le serveur d'application une garantie de paiement. Le serveur A stocke celui-ci et présente au kiosque K, ultérieurement, pour être payé à son tour.

Le chèque est une signature par le kiosque du montant m. Pour des problèmes de rejeux il contient aussi un aléa c qui est choisi par le serveur d'application et envoyé à l'utilisateur dans l'étape 1.

Si, dans les échanges représentés à la figure 2, on utilise un aléa c, un problème d'anonymat se pose car il devient possible au kiosque de relier, grâce à cet aléa c, l'échange de l'étape 2 entre l'utilisateur et le kiosque, et l'échange de l'étape 6 avec un chèque de même montant m et de même aléa. La règle 2 ne peut donc plus être satisfaite. En fait, l'information gênante pour l'anonymat est l'aléa c : le montant m peut permettre de relier les étapes 2 et 6, mais en pratique, l'utilisateur peut fractionner son paiement en valeurs élémentaires (comme quand on paye avec des pièces ou billets). Donc le montant m va correspondre à des montants prédéfinis, et de nombreuses transactions auront le même m. par exemple pour payer 11 francs, l'utilisateur peut demander au kiosque un chèque de 10 francs et un de 1 franc.

Pour résoudre ce problème, l'invention utilise donc un mécanisme de signature aveugle, dont le principe est décrit dans l'article intitulé "Blind Signatures for Untraceable Payments" de David Chaum (Crypto'82, Plenum Press, New-York, 1983, pages 199 à 203). Le mécanisme de l'invention peut être représenté par le schéma illustré à la figure 3. Le montant m contient une information sur le montant du chèque, et la date : cette dernière information permet au kiosque d'éviter des rejeux par le serveur d'application de chèques déjà utilisés : le kiosque n'a pas à mémoriser tous les chèques déjà utilisés, mais simplement, par exemple, ceux de la

semaine courante, si les serveurs d'application collectent leurs chèques par exemple, avec une périodicité inférieure à la semaine. Dans l'étape 7, la vérification concerne donc la signature Sig des chèques, la non présence d'un chèque identique dans le fichier des chèques reçus la semaine, et la mise à jour de ce fichier.

Plusieurs exemples de signatures aveugles ont été développés dans l'art antérieur.

Un système dit RSA décrit notamment dans un article intitulé "A Method for Obtaining Digital Signatures and Public-Key Cryptosystems" (Communications of the ACM, février 1978, pages 120 à 126) et dans 'L'écho des recherches" n° 124, $2^{ème}$ trimestre 1986, page 39, est un exemple type de système à clé publique.

Les schémas de signature aveugle avec RSA sont classiques. Les calculs se font dans Zn (entiers modulo n). c est calculé par c = P(r).c', où r est un aléa préalablement choisi par le demandeur de la signature de l'utilisateur. P est la fonction publique inverse de Sig. D'après les propriétés multiplicatives de RSA, Sig(c) = r.Sig(c') et donc Sig(c') = Sig(c)/r.

Mais dans ce schéma, il n'est pas possible de combiner une partie aveugle c et une partie m qui ne l'est pas.

Les adaptations au schéma général ci-dessus sont donc :

- pour le montant : avoir des clés RSA différentes pour différentes valeurs de chèques : par exemple franc, 5 francs, 10 francs... ;
- pour la date : le kiosque change périodiquement ces clés : toutes les semaines dans l'exemple ci-dessus.

Un article intitulé "Efficient Identification and Signatures for Smart Cards" de C.P. Schnorr (Proceedings of Crypto'89, Lectures Notes in Computer Science, volume 435, Springer Verlag, pages 239 à 252) décrit un système de signature.

On considère les notations suivantes :

- n nombre premier (512 bits) ; $b_1$, $b_2$ élément de Zn*, d'ordre q, grand ;
- s secret du kiosque, appartenant à Zn* ;
- $p_1$, $p_2$ clés publiques du kiosque : $p_1 = b_1{}^s$ ; $p_2 = b_2{}^s$ ; h fonction de condensation publique, à résultat dans Zq. Tous les calculs d'exponentiation sont faits modulo n ; les calculs de y, c, y', c' sont fait modulo q.

Comme représenté sur la figure 4 on peut utiliser le schéma de Schnorr avec un générateur b dépendant de m : $b = b_{1m}b_2$. Ce choix permet d'éviter certaines faiblesses d'un choix plus simple $b = b_{1m}$ du fait que $b^p = (b_{1m}b_2)^p$ et trouver m' et p' tel que $(b_{1m}b_2)^{p'} = b^p$ est d'une difficulté identique au problème du logarithme dans Zn.

Pour effectuer la vérification on effectue les calculs de $b = b_{1m}b_2$ ; $p = p_{1m}p_2$ ; c' = h (a, t', idA) ; le test $b^{y'} = t'p^{c'}$.

Un article intitulé "A Practical Zero-knowledge Protocol Fitted to Security Microprocessor Minimizing Both Transmission and Memory" de L.C. Guillou et J.J. Quisquater ("Proceeedings Eurocrypt' 88, Springer Verlag, Lecture Notes in Computer Sciences" volume 330-1988-pages 123-128) décrit un schéma dit GQ basé sur la difficulté de factoriser de grands entiers.

On prend les hypothèses et notations classiques du schéma GQ :

n : grand nombre, produit de deux nombres premiers p et q.
e : nombre premier entier (le calcul dans Zn des racines e-ièmes est possible si l'on connaît p et q).
g : est une fonction de Hashing, publique, à résultat dans Zn ; elle doit, pour éviter certaines possibilités d'attaque, être telle que h(a).h(b) # h(a;b), h étant une fonction de Hashing publique, à résultat dans Ze.

E : mentionnée plus bas, est la fonction "partie entière".

$$r = E(c'+u/e)$$

vaut donc 0 ou 1.

Tous les calculs avec des exponentiations sont faits modulo n.

Comme représenté sur la figure 5, on peut utiliser le schéma GQ avec valeur d'authentification $V = (g(m))^{1/e}$.

La vérification du chèque (y', t', a, m) se fait par : calcul de I = g(m) ; c' = h(a, t', idA) ; vérification que $y'^e = t'I^{c'}$.

Par contre, le problème résolu dans le procédé de l'invention concerne la remise d'informations I que l'utilisateur achète au serveur d'application. Dans une transaction télématique, où les relations entre partenaires sont dépersonnalisées (rendues anonymes grâce aux protocoles précédemment décrits), et effectuées par des machines dont le comportement peut a priori être modifié, il faut s'assurer que la malversation qui consiste pour l'utilisateur à ne pas payer la prestation que lui a délivré un serveur d'application, ou pour un serveur d'application à ne pas délivrer la prestation pour laquelle l'utilisateur l'a payé, n'est pas possible.

Deux variantes de l'invention sont proposées : la première variante est la plus "naturelle", et nécessite les mêmes échanges que décrit précédemment, au vu de la figure 3 ; la deuxième variante sépare les échanges concernant le paiement et la remise d'informations.

On utilise alors les notations suivantes :

- Sk/Pk, Sa/Pa : clés secrètes et publiques du kiosque et du serveur d'application ; les clés publiques sont connues de tous, ce qui permet les vérifications de

signatures ;

- I : information servie par le serveur d'application à l'utilisateur ;
- I' : I chiffré par r ;
- r : clé de chiffrement ; et
- r' : clé de chiffrement chiffrée par Pk : r' = Pk(r).

Dans la première variante, illustrée à la figure 6, l'information I envoyée par un serveur d'application à un utilisateur est chiffrée et donc inexploitable tant que l'utilisateur n'a pas la clé. La clé de déchiffrement est calculée par le kiosque lors du débit du compte de l'utilisateur, et renvoyée à l'utilisateur. Le serveur d'application signe ce qu'il envoie à l'utilisateur de façon à ne pouvoir répudier son envoi (pour être payé par l'utilisateur sans lui fournir de service, c'est-à-dire sans lui envoyer une information I utilisable), et à protéger l'intégrité de ce qu'il envoie (pour éviter que l'utilisateur n'altère l'information I dans l'intention de se faire rembourser). Le kiosque est le "juge" qui en cas de litige, dispose des éléments cryptographiques irréfutables lui permettant de savoir qui est le fautif.

On peut alors considérer plusieurs scénarios de fraudes.

Si le serveur d'application ne veut pas servir l'utilisateur :

- le serveur d'application triche sur sa signature : l'utilisateur peut vérifier Sa(I', r', c',m). Si la vérification est négative, la transaction doit être arrêtée ;
- le serveur d'application triche sur le contenu de l'information I envoyée : Sa (I', r', c', m) authentifie les informations I', r', c', m ; l'utilisateur peut se retourner vers le kiosque qui, avec r, est convaincu que l'information renvoyée par le serveur d'application est inutilisable.

Si l'utilisateur ne veut pas payer le serveur d'application :

- l'utilisateur peut changer le montant demandé au kiosque. Il demande m1 au lieu de m, ml<m : le serveur d'application peut s'en apercevoir et se plaindre au kiosque ; avec r', le kiosque retrouve l'identité de l'utilisateur (idU) ; et l'utilisateur ne peut montrer au kiosque une signature Sa(I',r',c',ml) puisqu'il a reçu Sa(I',r',c'm) ;
- l'utilisateur peut ne pas demander ce chèque au kiosque : il n'a pas r qui lui permet de transformer I' en I ;
- l'utilisateur peut ne pas renvoyer sig(m,c'), au serveur d'application. Mais le compte de l'utilisateur a déjà été débité de m. Donc ce n'est pas une fraude intéressante pour l'utilisateur. Le serveur d'application connaît c', r' et r ; il se plaint auprès du kiosque qui, avec r' retrouve l'identité de l'utilisateur (idU), et c. Le kiosque retrouve donc tout ce qu'il avait renvoyé à l'utilisateur ; l'utilisateur est donc confondu.

Si le serveur d'application répudie le paiement reçu :

- le serveur d'application doit apporter comme preuve au kiosque : c' et r'. Avec r', si le kiosque retrouve IdU, l'utilisateur a bien payé le serveur d'application. Si le kiosque ne retrouve pas IdU, les preuves apportées par le serveur d'application sont fausses.

L'anonymat obtenu dans le cas de cette variante est conditionné au fait qu'il n'y ait pas collusion entre le serveur d'application et le kiosque pour retrouver l'utilisateur. Cette hypothèse est nécessaire pour pouvoir traiter les cas de fraudes décrits ci-dessus.

Si l'on considère alors la seconde variante, illustrée à la figure 7 : la remise par le serveur d'application d'informations I à l'utilisateur se fait après réception du chèque de l'utilisateur ; ceci résout tous les cas de fraudes de l'utilisateur. Le serveur d'application s'engage sur l'information qu'il va fournir à l'utilisateur après le paiement, par une signature Sa(I,c',m).

Si le serveur d'application triche (incohérence entre la signature Sa donnée et I reçu, ou non remise par le serveur d'application de I) l'utilisateur peut se retourner vers le kiosque en donnant comme éléments de preuve de sa bonne foi le chèque m, c', c et Sa (I,m,c').

Si l'utilisateur triche, il n'y a pas de risques pour le serveur d'application car il ne délivre I qu'après vérification du paiement.

## Revendications

1. Procédé d'échange d'informations dans une application télématique entre au moins un utilisateur (U) , un premier serveur (K) et au moins un second serveur (A) reliés à au moins un réseau de communication, **caractérisé en ce qu'**il comprend les étapes suivantes :

   A- un second serveur (A) envoie audit utilisateur (U) une demande pour un montant déterminé (11);
   B- ledit utilisateur (U) demande au premier serveur (K) ce montant déterminé (12) ;
   C- ledit premier serveur (K) soustrait le compte dudit utilisateur (U) dudit montant déterminé, et envoie audit utilisateur (U) un ensemble de données électroniques ou numériques comprenant une signature électronique, et ayant une valeur convenue correspondant à ce montant déterminé (13) ;
   D-ledit utilisateur (U) vérifie cet ensemble de données, le modifie pour que le premier serveur (K) ne le reconnaisse pas, et l'envoie audit second serveur (14) ;
   E- ledit second serveur (A) vérifie cet ensemble de données et stocke celui-ci (15),

et **en ce que**, dans des étapes ultérieures ;

F- ledit second serveur (A) transmet audit premier serveur au moins un ensemble de données stocké (16) ;
G- ledit premier serveur (K) vérifie chacun des ensembles de données reçus et transmet audit second serveur le montant cumulé de ceux-ci (17).

**2.** Procédé selon la revendication 1, dans lequel cet ensemble de données contient une information concernant son montant, sa date, ainsi qu'un aléa.

**3.** Procédé selon la revendication 1, dans lequel le premier serveur, dans l'étape G (17) vérifie la signature des ensembles de données, la non-présence d'un ensemble de données identique dans le fichier des ensembles de données reçus et la mise à jour de ce fichier.

**4.** Procédé selon la revendication 1, dans lequel, malgré les traitements préalables, les ensembles de données reçus après l'étape F ne peuvent être corrélés avec les ensembles de données envoyés dans l'étape C, grâce à une modification de l'étape D d'envoi de l'ensemble de donnés au second serveur, ce qui permet de garder l'anonymat de l'utilisateur.

**5.** Procédé selon la revendication 1, dans lequel les seconds serveurs (A) collectent leurs ensembles de données avec une certaine périodicité.

**6.** Procédé selon l'une quelconque des revendications précédentes, qui permet de résoudre les litiges éventuels entre transmission et remise d'information électronique, selon deux moyens, et ceci bien que l'anonymat soit une caractéristique importante d'un tel procédé :

- l'information envoyée par le second serveur (A) à l'utilisateur (U) est chiffrée, la clé de déchiffrement est calculée par le premier serveur (K) lors de la soustraction du compte de l'utilisateur (U) et renvoyée à l'utilisateur (U), et le second serveur (A) signe ce qu'il envoie à l'utilisateur (U), ainsi transmission et remise sont synchronisés ;
- la remise par le second serveur (A) d'informations (I) à l'utilisateur (U) se fait après réception de l'ensemble de données de l'utilisateur (U) le second serveur s'engageant avant la transmission sur la remise de l'information, par une signature électronique.

**7.** Procédé selon la revendication 1, qui comprend les étapes successives suivants :

- le second serveur (A) envoie à l'utilisateur un message contenant le montant m à demander à celui-ci,
- si l'utilisateur (U) est d'accord, il envoie un message au premier serveur,
- le premier serveur (K) envoie un message à l'utilisateur contenant une valeur t telle que $t=b^x$, avec un générateur $b=b_1^m b_2$, un secret s et un aléa x choisi par le premier serveur (K),
- l'utilisateur (U) envoie un message au second serveur contenant une valeur t' telle que $t'= t b^v p^u$ avec $p=p_1^m p_2$, u et v étant des aléas dans $Z_q$,
- le second serveur (A) envoie un message à l'utilisateur contenant la valeur c', telle que c'=h (a, t', idA), a étant un aléa, idA étant l'identité du second serveur,
- l'utilisateur (U) envoie un message au premier serveur contenant une valeur c telle que c= c'+uMODq,
- le premier serveur (K) soustrait la valeur m du compte de l'utilisateur et calcule y=x+sc MODq et envoie un message à l'utilisateur contenant cette valeur y,
- l'utilisateur (U) vérifie que $b^y=tp^c$ et calcule y'= y+vMODq et envoie cette valeur y' au second serveur,
- le second serveur (A) vérifie que $b^{y'} =t' p^{c'}$ et mémorise l'ensemble de données (y', t', a, m).

**8.** Procédé selon la revendication 1, qui comprend les étapes successives suivantes :

- le second serveur (A) envoie à l'utilisateur un message contenant un montant m à demander à celui-ci,
- si l'utilisateur (U) est d'accord il envoie un message au premier serveur contenant les valeurs m et idn (identité),
- le premier serveur (K) calcule $t=x^e$, avec un aléa x tel que $o<x<n$, les valeurs e et n étant publiques, et envoie un message à l'utilisateur contenant la valeur t,
- l'utilisateur (U) calcule $t'=tw^e I^u$ avec un aléa w tel que $o<w<n$, et un aléa u tel que $o<u<e$, et envoie un message contenant la valeur t' au second serveur,
- le second serveur (A) calcule c'=h (a, t', id A) avec un aléa a, idA étant l'identité du second serveur, et envoie un message à l'utilisateur contenant la valeur c',
- l'utilisateur (U) calcule c=c' + uMODe et envoie un message au premier serveur contenant la valeur c,
- le premier serveur (K) soustrait la valeur m du compte de l'utilisateur, calcule la valeur $y=xV^c$ et envoie un message contenant cette valeur y à l'utilisateur,
- l'utilisateur (U) vérifie que $y^e = tI^c$, calcule

$y'=wyl^r$ et envoie un message au second serveur contenant cette valeur y',
- le second serveur (A) vérifie que $y'^e=t'l^{c'}$ et mémorise l'ensemble de données (y', t', a, m).

**9.** Dispositif télématique comprenant un premier serveur (K), au moins un second serveur (A) en liaison avec au moins un utilisateur (U) par l'intermédiaire d'un réseau de communication, **caractérisé en ce que** le premier serveur (K) comprend des moyens de contrôle d'un horodatage des demandes reçues de l'utilisateur, des moyens de soustraction d'un montant déterminé m du compte de l'utilisateur et des moyens de calcul de signature aveugle en utilisant un aléa et **en ce que** le second serveur (A) comprend des moyens de choix d'un aléa (c'), des moyens d'émission audit utilisateur (U) de cet aléa et d'une demande pour un montant déterminé associée à cet horodatage, des moyens de vérification de la signature aveugle des ensembles de données (sig (m, c')) reçus de l'utilisateur (U) et des moyens de stockage de ces ensembles de données.

**10.** Serveur (K) apte à être relié à au moins un second serveur (A) et à au moins un utilisateur (U) par l'intermédiaire d'un réseau de communication, **caractérisé en ce qu'**il comprend :

- des moyens de contrôle d'un horodatage des demandes reçues de l'utilisateur,
- des moyens de soustraction d'un montant déterminé m du compte de l'utilisateur (U),
- des moyens de calcul de signature aveugle, en utilisant un aléa.

**11.** Serveur (A) apte à être relié à un premier serveur (K) et à au moins un utilisateur (U) par l'intermédiaire d'un réseau de communication, **caractérisé en ce qu'**il comprend :

- des moyens de choix d'un aléa (c'),
- des moyens d'émission audit utilisateur (U) de cet aléa et d'une demande pour un montant déterminé associée à un horodatage,
- des moyens de vérification de la signature aveugle des ensembles de données (sig (m,c')) reçus de l'utilisateur (U),
- des moyens de stockage de ces ensembles de données.

## Claims

**1.** Method of exchanging information in a telematics application between at least one user (U), a first server (K) and at least one second server (A) linked to at least one communication network, **characterized in that** it comprises the following steps:

A- a second server (A) sends to said user (U) a request for a predetermined amount (11);
B- said user (U) asks the first server (K) for this predetermined amount (12);
C- said first server (K) subtracts the predetermined amount from the account of said user (U), and sends to said user (U) a set of electronic or digital data comprising an electronic signature, and having an agreed value corresponding to this predetermined amount (13);
D- said user (U) checks this set of data, modifies it so that the first server (K) does not recognize it, and sends it to said second server (14);
E- said second server (A) checks this set of data and stores it (15),

and **in that**, in subsequent steps;

F- said second server (A) transmits to said first server at least one stored set of data (16);
G- said first server (K) checks each of the sets of data received and transmits to said second server the cumulative amount of the latter (17).

**2.** Method according to Claim 1, in which this set of data contains information concerning its amount, its date, and a random variable.

**3.** Method according to Claim 1, in which the first server, in the step G (17) checks the signature of the set of data, the non-presence of an identical set of data in the file of the sets of data received and the updating of this file.

**4.** Method according to Claim 1, in which, despite the prior processes, the sets of data received after the step F cannot be correlated with the sets of data sent in the step C, because of a modification of the step D for sending the set of data to the second server, which makes it possible to maintain the anonymity of the user.

**5.** Method according to Claim 1, in which the second servers (A) collect their sets of data with a certain periodicity.

**6.** Method according to any one of the preceding claims, which makes it possible to resolve any disputes between transmission and handover of electronic information, according to two means, and this despite the fact that anonymity is an important characteristic of such a method:

- the information sent by the second server (A) to the user (U) is encrypted, the decryption key is calculated by the first server (K) on subtraction from the account of the user (U) and returned to the user (U), and the second server (A) signs

what it sends to the user (U), so transmission and handover are synchronized;

- the handover by the second server (A) of information (I) to the user (U) is conducted after receiving the set of data from the user (U), the second server being committed prior to the transmission to the handover of the information, by an electronic signature.

**7.** Method according to Claim 1, which comprises the following successive steps:

- the second server (A) sends to the user a message containing the amount m to be requested of the latter,
- if the user (U) agrees, he sends a message to the first server,
- the first server (K) sends a message to the user containing a value t such that $t=b^x$, with a generator $b=b_1^m b_2$, a secret s and a random variable x chosen by the first server (K),
- the user (U) sends a message to the second server containing a value t' such that $t'=t\ b^v\ p^u$ with $p=p_1^m p_2$, u and v being random variables in $Z_q$,
- the second server (A) sends a message to the user containing the value c', such that c'=h (a, t', idA), a being a random variable, idA being the identity of the second server,
- the user (U) sends a message to the first server containing a value c such that c=c'+uMODq,
- the first server (K) subtracts the value m from the account of the user and calculates y=x+sc MODq and sends a message to the user containing this value y,
- the user (U) checks that $b^y=tp^c$ and calculates y' = y+vMODq and sends this value y' to the second server,
- the second server (A) checks that $b^{y'}=t'p^{c'}$ and memorizes the set of data (y', t', a, m).

**8.** Method according to Claim 1, which comprises the following successive steps:

- the second server (A) sends to the user a message containing an amount m to be requested of the latter,
- if the user (U) agrees, he sends a message to the first server containing the values m and idn (identity),
- the first server (K) calculates $t=x^e$, with a random variable x such that o<x<n, the values e and n being public, and sends a message to the user containing the value t,
- the user (U) calculates $t'=tw^e l^u$ with a random variable w such that o<w<n, and a random variable u such that o<u<e, and sends a message containing the value t' to the second server,
- the second server (A) calculates c'=h (a, t', id A) with a random variable a, idA being the identity of the second server, and sends a message to the user containing the value c',
- the user (U) calculates c=c' + uMODe and sends a message to the first server containing the value c,
- the first server (K) subtracts the value m from the account of the user, calculates the value $y=xV^c$ and sends a message containing this value y to the user,
- the user (U) checks that $y^e = tl^c$, calculates $y'=wyl^r$ and sends a message to the second server containing this value y',
- the second server (A) checks that $y'^e=t'\ 1^{c'}$ and memorizes the set of data (y', t', a, m).

**9.** Telematics device comprising a first server (K), at least one second server (A) linked with at least one user (U) via a communication network, **characterized in that** the first server (K) comprises means of controlling a timestamp of the requests received from the user, means of subtracting a predetermined amount m from the account of the user and means of calculating blind signatures using a random variable, and **in that** the second server (A) comprises means of choosing a random variable (c'), means of sending to said user (U) this random variable and a request for a predetermined amount associated with this timestamp, means of checking the blind signature of the sets of data (sig (m, c')) received from the user (U) and means of storing these sets of data.

**10.** Server (K) able to be linked to at least one second server (A) and at least one user (U) via a communication network, **characterized in that** it comprises:

- means of controlling a timestamping of the requests received from the user,
- means of subtracting a predetermined amount m from the account of the user (U),
- means of calculating blind signatures using a random variable.

**11.** Server (A) able to be linked to a first server (K) and to at least one user (U) via a communication network, **characterized in that** it comprises:

- means of choosing a random variable (c'),
- means of sending to said user (U) this random variable and a request for a predetermined amount associated with a timestamp,
- means of checking the blind signature of the sets of data (sig (m,c')) received from the user (U),
- means of storing these sets of data.

**Patentansprüche**

1. Verfahren zum Datenaustausch in einer Datenübertragungsanordnung zwischen zumindest einem Benutzer (U), einem ersten Server (K) und zumindest einem zweiten Server (A), die mit zumindest einem Kommunikationsnetz verbunden sind, **dadurch gekennzeichnet, dass** es die folgenden Schritte aufweist:

   A - ein zweiter Server (A) sendet dem Benutzer (U) eine Aufforderung für einen bestimmten Betrag (11);
   B - der Benutzer (U) fragt den ersten Server (K) nach diesem bestimmten Betrag (12);
   C - der erste Server (K) subtrahiert vom Konto des Benutzers (U) den bestimmten Betrag und sendet dem Benutzer (U) eine Einheit aus elektronischen oder numerischen Daten mit einer elektronischen Signatur, die einen vereinbarten Wert aufweist, der diesem bestimmten Betrag entspricht (13);
   D - der Benutzer (U) überprüft diese Dateneinheit, ändert sie, damit der erste Server (K) sie nicht wieder erkennt, und sendet sie dem zweiten Server (14);
   E - der zweite Server (A) überprüft diese Dateneinheit und speichert sie (15),

   und **dadurch** dass, in den folgenden Schritten;

   F - der zweite Server (A) dem ersten Server zumindest eine gespeicherte Dateneinheit überträgt (16);
   G - der erste Server (K) jede der empfangenen Dateneinheiten überprüft und dem zweiten Server den von ihm kumulierten Betrag überträgt (17).

2. Verfahren nach Anspruch 1, in dem diese Dateneinheit eine Information bezüglich ihres Betrags, ihres Datums, sowie einen Zufallswert enthält.

3. Verfahren nach Anspruch 1, in dem der erste Server, im Schritt G (17) die Signatur der Dateneinheit, die Nichtanwesenheit einer identischen Dateneinheit in der Datei der empfangenen Dateneinheiten und die Aktualisierung von dieser Datei überprüft.

4. Verfahren nach Anspruch 1, in dem trotz der vorherigen Bearbeitungen, die nach dem Schritt F empfangenen Dateneinheiten nicht mit den im Schritt C gesendeten Dateneinheiten korreliert werden können, und dies dank einer Änderung des Schritts D vom Senden der Dateneinheit an den zweiten Server, was es erlaubt, die Anonymität des Benutzers zu bewahren.

5. Verfahren nach Anspruch 1, in dem die zweiten Server (A) ihre Dateneinheiten mit einer bestimmten Periodizität sammeln.

6. Verfahren nach einem der vorhergehenden Ansprüche, das es erlaubt, die möglichen Störungen zwischen Übertragung und Übergabe von elektronischen Daten nach zwei Mitteln zu beheben, und dies obwohl die Anonymität ein wichtiges Merkmal eines derartigen Verfahrens ist:

   - die vom zweiten Server (A) an den Benutzer (U) gesandte Information wird verschlüsselt, der Entschlüsselungsschlüssel wird durch den ersten Server (K) bei der Subtraktion des Kontos vom Benutzer (U) berechnet und an den Benutzer (U) zurückgesandt, und der zweite Server (A) signiert das, was er dem Benutzer (U) sendet, wodurch Übertragung und Übergabe synchronisiert sind;
   - die Übergabe durch den zweiten Server (A) von Daten (I) an den Benutzer (U) erfolgt nach dem Empfang der Dateneinheit vom Benutzer (U), wobei sich der zweite Server vor der Übertragung über die Übergabe der Information durch eine elektronische Signatur verpflichtet.

7. Verfahren nach Anspruch 1, das die folgenden aufeinander folgenden Schritte aufweist:

   - der zweite Server (A) sendet dem Benutzer eine Nachricht mit dem Betrag m, der bei diesem anzufordern ist,
   - ist der Benutzer (U) einverstanden, sendet er dem ersten Server eine Nachricht,
   - der erste Server (K) sendet dem Benutzer eine Nachricht mit einem Wert t wie $t=b^x$, mit einem Generator $b=b_1^m b_2$, einem Geheimwert s und einem Zufallswert x, der vom ersten Server (K) gewählt wird,
   - der Benutzer (U) sendet dem zweiten Server eine Nachricht mit einem Wert t' wie $t'=t\, b^v p^u$ mit $p=p_1^m p_2$, wobei u und v Zufallswerte in $Z_q$ sind,
   - der zweite Server (A) sendet dem Benutzer eine Nachricht mit dem Wert c', wie c'=h (a, t', idA), wobei a ein Zufallswert und idA die Identität des zweiten Servers ist,
   - der Benutzer (U) sendet dem ersten Server eine Nachricht mit einem Wert c wie c=c'+uMODq,
   - der erste Server (K) subtrahiert den Wert m vom Konto des Benutzers und berechnet y=x+sc MODq und sendet eine Nachricht mit diesem Wert y an den Benutzer,
   - der Benutzer (U) überprüft, dass $b^y=tp^c$ ist und berechnet y'= y+vMODq und sendet diesen Wert y' an den zweiten Server,

- der zweite Server (A) überprüft, dass $b^{Y'}=t'p^{c'}$ ist und speichert die Dateneinheit (y', t', a, m).

**8.** Verfahren nach Anspruch 1, das folgende aufeinander folgende Schritte aufweist:

- der zweite Server (A) sendet dem Benutzer eine Nachricht mit einem Betrag m, der bei diesem anzufordern ist,
- ist der Benutzer (U) einverstanden, sendet er dem ersten Server eine Nachricht mit den Werten m und idn (Identität),
- der erste Server (K) berechnet $t=x^e$, mit einem Zufallswert x wie $o<x<n$, wobei die Werte e und n öffentlich sind, und sendet dem Benutzer eine Nachricht mit dem Wert t,
- der Benutzer (U) berechnet $t'=tw^e l^u$ mit einem Zufallswert w wie $o<w<n$ und einem Zufallswert u wie $o<u<e$ und sendet eine Nachricht mit dem Wert t' an den zweiten Server,
- der zweite Server (A) berechnet c'=h (a, t', id A) mit einem Zufallswert a, wobei idA die Identität des zweiten Servers ist, und sendet eine Nachricht mit dem Wert c' an den Benutzer,
- der Benutzer (U) berechnet c=c' + uMODe und sendet eine Nachricht mit dem Wert c an den ersten Server,
- der erste Server (K) subtrahiert den Wert m vom Konto des Benutzers, berechnet den Wert $y=xV^c$ und sendet eine Nachricht mit diesem Wert y an den Benutzer,
- der Benutzer (U) überprüft, dass $y^e=tl^c$ ist, berechnet $y'=wyl^r$ und sendet eine Nachricht mit diesem Wert y' an den zweiten Server,
- der zweite Server (A) überprüft, dass $y'^e=t'\,l^{c'}$ ist und speichert die Dateneinheit (y', t', a, m).

**9.** Datenübertragungsvorrichtung mit einem erstem Server (K), zumindest einem zweiten Server (A) in Verbindung mit zumindest einem Benutzer (U) über ein Kommunikationsnetz, **dadurch gekennzeichnet, dass** der erste Server (K) folgendes aufweist: Mittel zur Kontrolle einer Zeiterfassung der vom Benutzer empfangenen Aufforderungen, Mittel zur Subtraktion eines bestimmten Betrages m vom Konto des Benutzers und Mittel zur Berechnung der blinden Signatur, die einen Zufallswert verwendet, und **dadurch**, dass der zweite Server (A) folgendes aufweist: Mittel zur Auswahl eines Zufallwertes (c'), Mittel zum Senden an den Benutzer (U) von diesem Zufallswert und von einer Aufforderung für einen bestimmten Betrag in Verbindung mit dieser Zeiterfassung, Mittel zur Überprüfung der blinden Signatur der vom Benutzer (U) empfangenen Dateneinheiten (sig (m, c' )) und Mittel zur Speicherung von diesen Dateneinheiten.

**10.** Server (K), der dazu geeignet ist, mit zumindest einem zweiten Server (A) und zumindest einem Benutzer (U) über ein Kommunikationsnetz verbunden zu sein, **dadurch gekennzeichnet, dass** er folgendes aufweist:

- Mittel zur Kontrolle einer Zeiterfassung der vom Benutzer empfangenen Aufforderungen,
- Mittel zur Subtraktion eines bestimmten Betrages m vom Konto des Benutzers (U),
- Mittel zur Berechnung der blinden Signatur durch Verwendung eines Zufallwertes.

**11.** Server (A), der dazu geeignet ist, mit einem ersten Server (K) und zumindest einem Benutzer (U) über ein Kommunikationsnetz verbunden zu sein, **dadurch gekennzeichnet, dass** er folgendes aufweist:

- Mittel zur Auswahl eines Zufallwertes (c'),
- Mittel zum Senden an den Benutzer (U) von diesem Zufallswert und von einer Aufforderung für einen bestimmten Betrag in Verbindung mit einer Zeiterfassung,
- Mittel zur Überprüfung der blinden Signatur der vom Benutzer (U) empfangenen Dateneinheiten (sig (m, c')),
- Mittel zur Speicherung dieser Dateneinheiten.

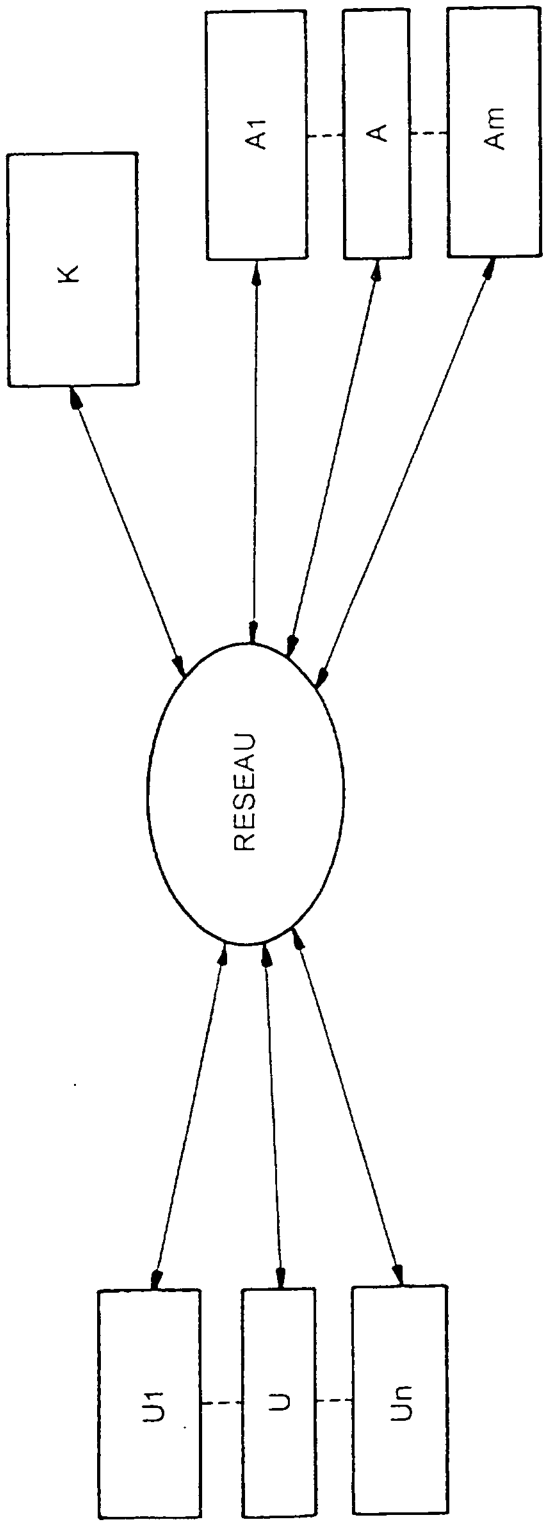


FIG.1

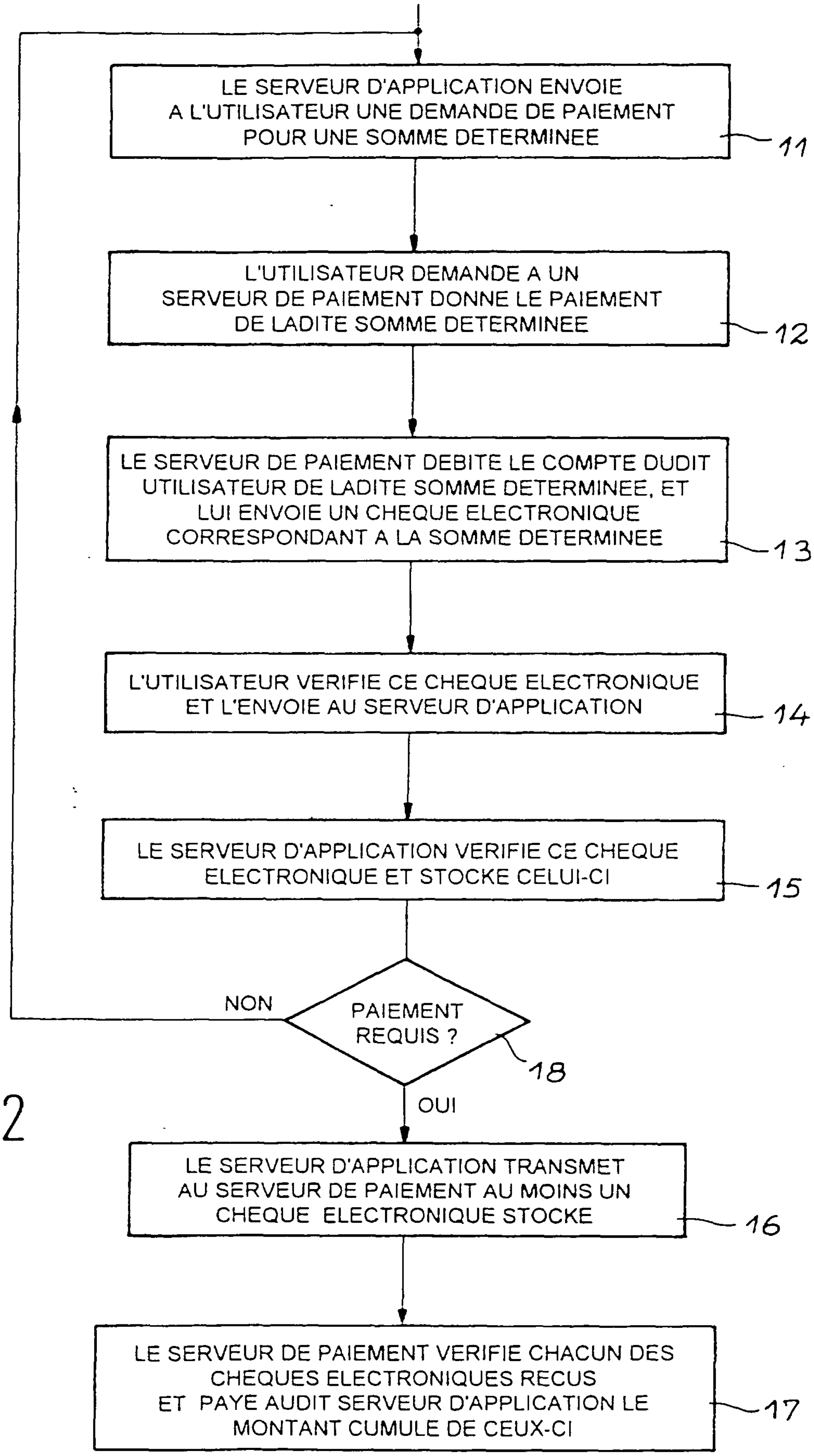
LE SERVEUR D'APPLICATION ENVOIE
A L'UTILISATEUR UNE DEMANDE DE PAIEMENT
POUR UNE SOMME DETERMINEE
11
L'UTILISATEUR DEMANDE A UN
SERVEUR DE PAIEMENT DONNE LE PAIEMENT
DE LADITE SOMME DETERMINEE
12
LE SERVEUR DE PAIEMENT DEBITE LE COMPTE DUDIT
UTILISATEUR DE LADITE SOMME DETERMINEE, ET
LUI ENVOIE UN CHEQUE ELECTRONIQUE
CORRESPONDANT A LA SOMME DETERMINEE
13
L'UTILISATEUR VERIFIE CE CHEQUE ELECTRONIQUE
ET L'ENVOIE AU SERVEUR D'APPLICATION
14
LE SERVEUR D'APPLICATION VERIFIE CE CHEQUE
ELECTRONIQUE ET STOCKE CELUI-CI
15
NON
PAIEMENT
REQUIS ?
18
OUI
LE SERVEUR D'APPLICATION TRANSMET
AU SERVEUR DE PAIEMENT AU MOINS UN
CHEQUE ELECTRONIQUE STOCKE
16
LE SERVEUR DE PAIEMENT VERIFIE CHACUN DES
CHEQUES ELECTRONIQUES RECUS
ET PAYE AUDIT SERVEUR D'APPLICATION LE
MONTANT CUMULE DE CEUX-CI
17

FIG. 2

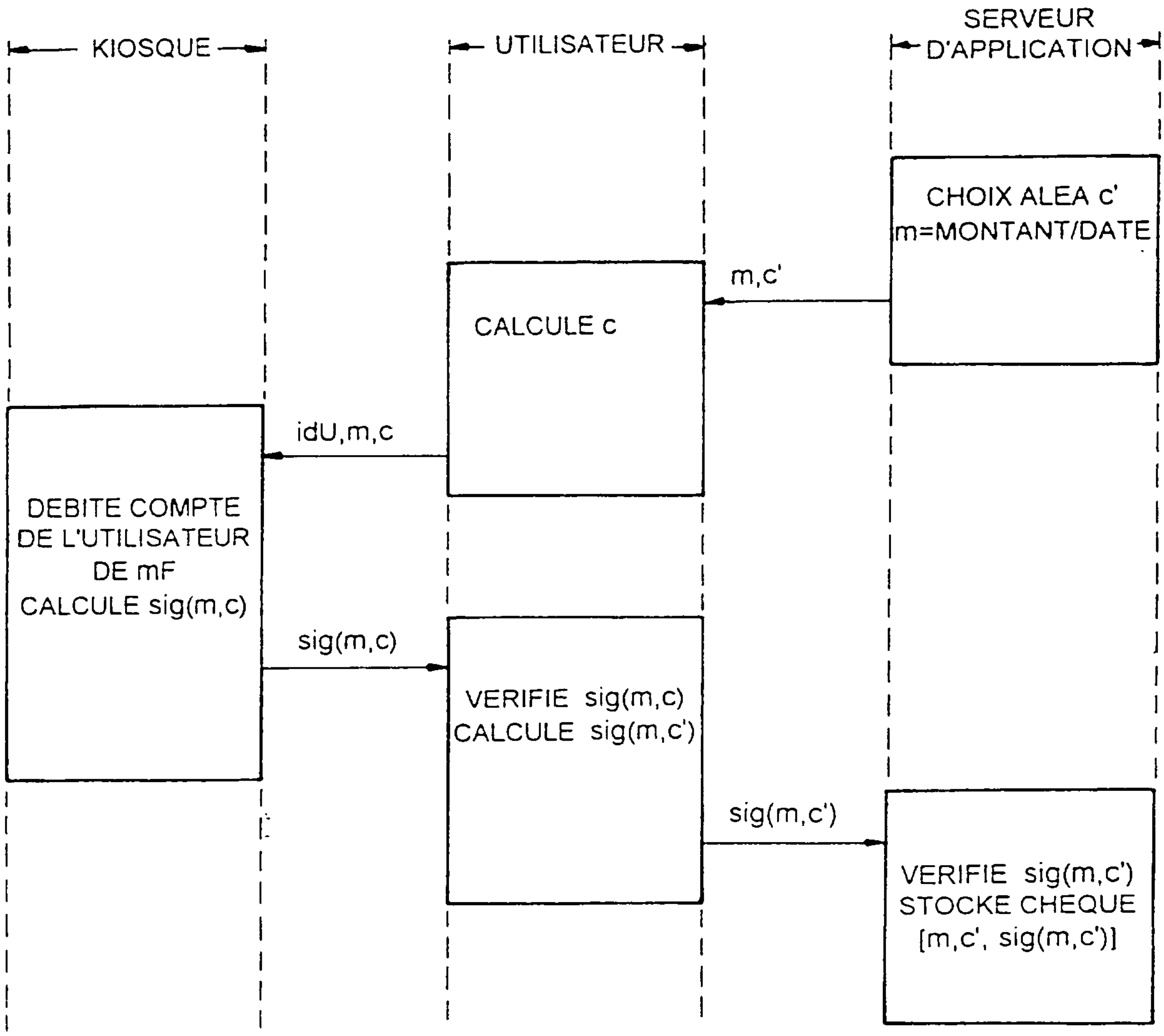
KIOSQUE
UTILISATEUR
SERVEUR D'APPLICATION
CHOIX ALEA c'
m=MONTANT/DATE
m,c'
CALCULE c
idU,m,c
DEBITE COMPTE DE L'UTILISATEUR DE mF
CALCULE sig(m,c)
sig(m,c)
VERIFIE sig(m,c)
CALCULE sig(m,c')
sig(m,c')
VERIFIE sig(m,c')
STOCKE CHEQUE
[m,c', sig(m,c')]

FIG. 3

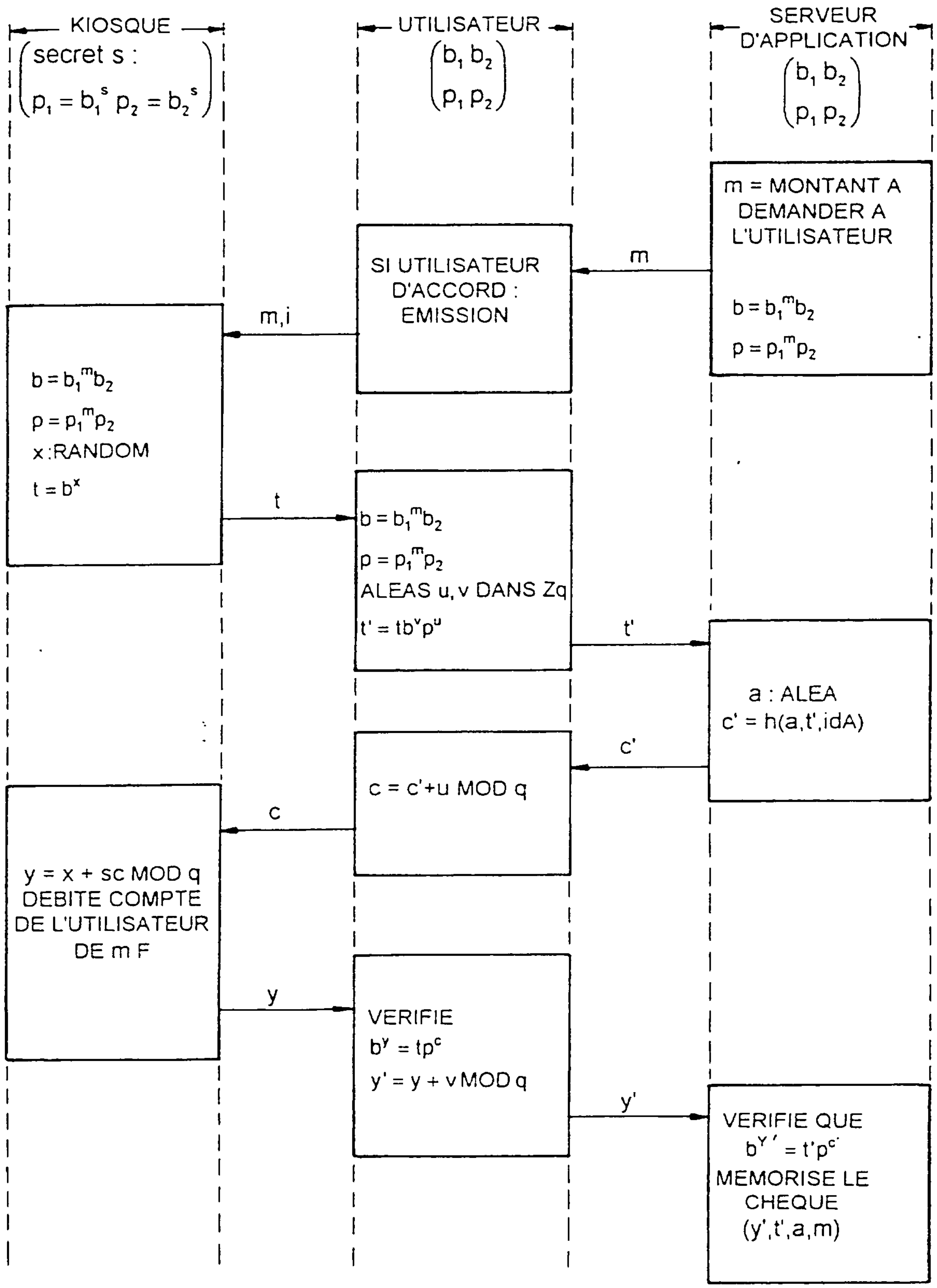
KIOSQUE
secret s :
$p_1 = b_1^s\ p_2 = b_2^s$
UTILISATEUR
$b_1\ b_2$
$p_1\ p_2$
SERVEUR D'APPLICATION
$b_1\ b_2$
$p_1\ p_2$
m = MONTANT A DEMANDER A L'UTILISATEUR
$b = b_1^m b_2$
$p = p_1^m p_2$
m
SI UTILISATEUR D'ACCORD : EMISSION
m,i
$b = b_1^m b_2$
$p = p_1^m p_2$
x :RANDOM
$t = b^x$
t
$b = b_1^m b_2$
$p = p_1^m p_2$
ALEAS u, v DANS Zq
$t' = tb^v p^u$
t'
a : ALEA
c' = h(a,t',idA)
c'
c = c'+u MOD q
c
y = x + sc MOD q
DEBITE COMPTE DE L'UTILISATEUR DE m F
y
VERIFIE
$b^y = tp^c$
y' = y + v MOD q
y'
VERIFIE QUE
$b^{y'} = t'p^{c'}$
MEMORISE LE CHEQUE
(y',t',a,m)

FIG. 4

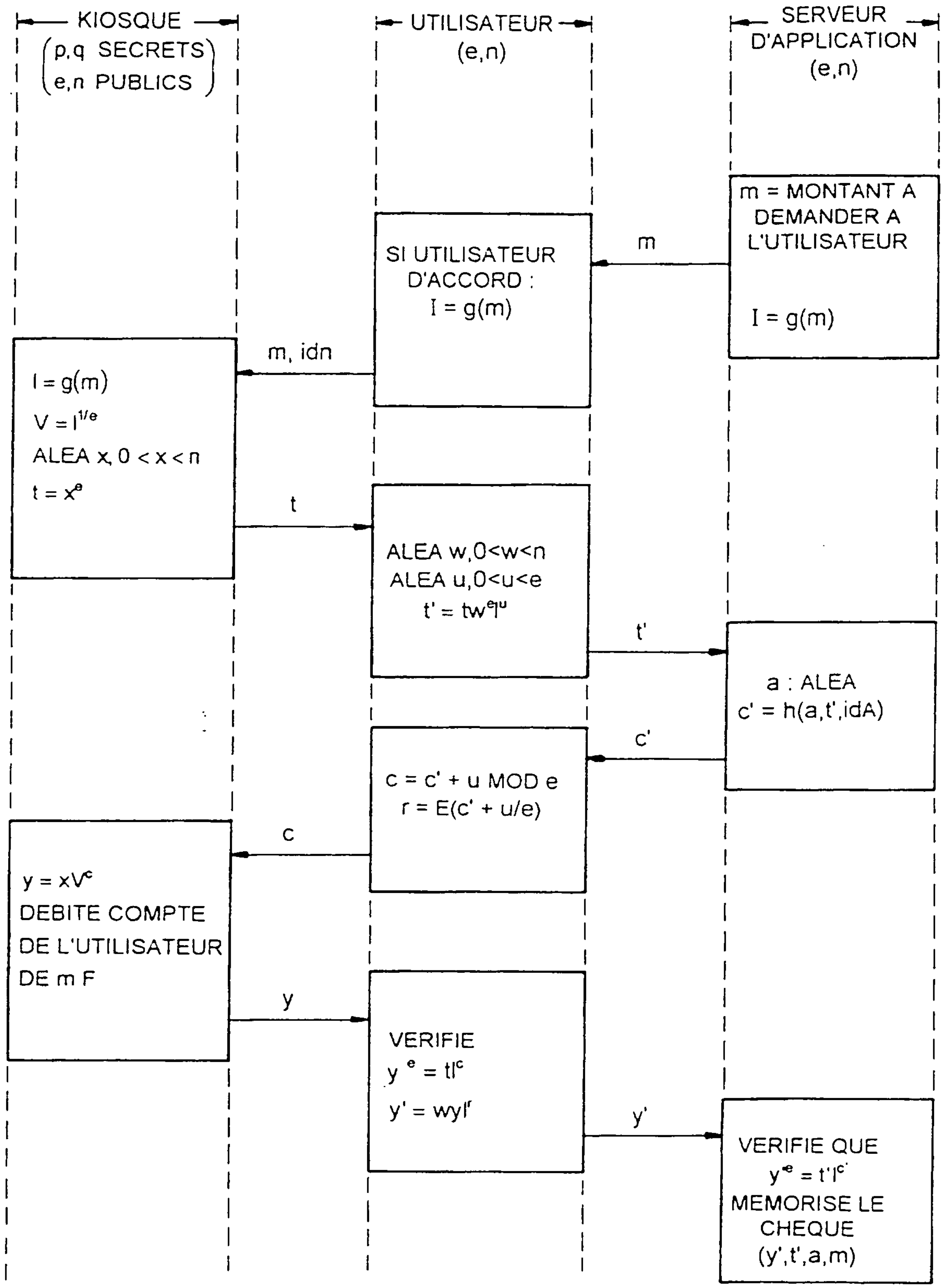
KIOSQUE
p,q SECRETS
e,n PUBLICS
UTILISATEUR
(e,n)
SERVEUR D'APPLICATION
(e,n)
m = MONTANT A DEMANDER A L'UTILISATEUR
I = g(m)
m
SI UTILISATEUR D'ACCORD :
I = g(m)
m, idn
I = g(m)
V = I^1/e
ALEA x, 0 < x < n
t = x^e
t
ALEA w,0<w<n
ALEA u,0<u<e
t' = tw^e I^u
t'
a : ALEA
c' = h(a,t',idA)
c'
c = c' + u MOD e
r = E(c' + u/e)
c
y = xV^c
DEBITE COMPTE DE L'UTILISATEUR DE m F
y
VERIFIE
y^e = tI^c
y' = wyI^r
y'
VERIFIE QUE
y'^e = t'I^c'
MEMORISE LE CHEQUE
(y',t',a,m)

FIG. 5

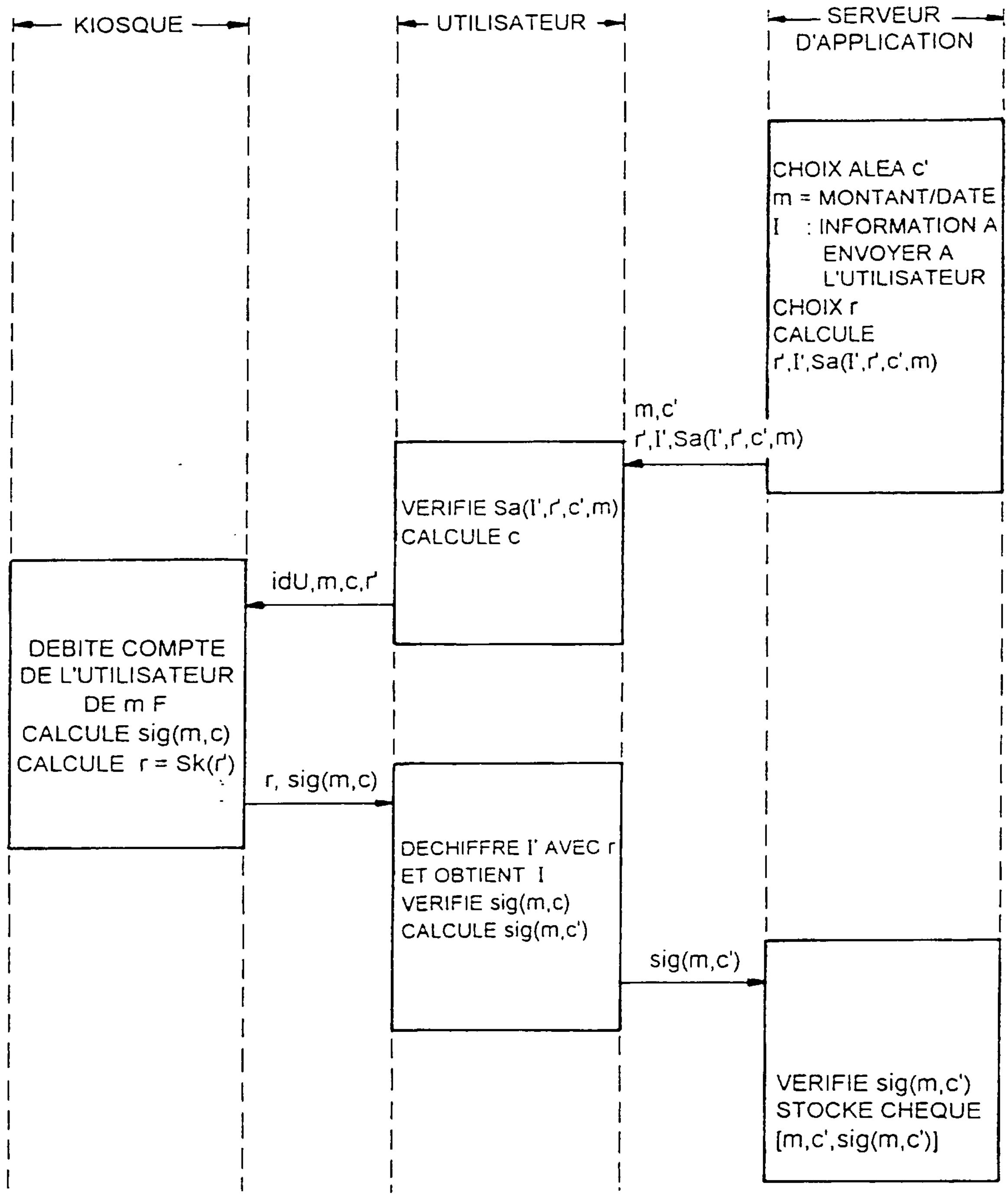
KIOSQUE
UTILISATEUR
SERVEUR D'APPLICATION
CHOIX ALEA c'
m = MONTANT/DATE
I : INFORMATION A ENVOYER A L'UTILISATEUR
CHOIX r
CALCULE
r',I',Sa(I',r',c',m)
m,c'
r',I',Sa(I',r',c',m)
VERIFIE Sa(I',r',c',m)
CALCULE c
idU,m,c,r'
DEBITE COMPTE DE L'UTILISATEUR DE m F
CALCULE sig(m,c)
CALCULE r = Sk(r')
r, sig(m,c)
DECHIFFRE I' AVEC r
ET OBTIENT I
VERIFIE sig(m,c)
CALCULE sig(m,c')
sig(m,c')
VERIFIE sig(m,c')
STOCKE CHEQUE
[m,c',sig(m,c')]

FIG. 6

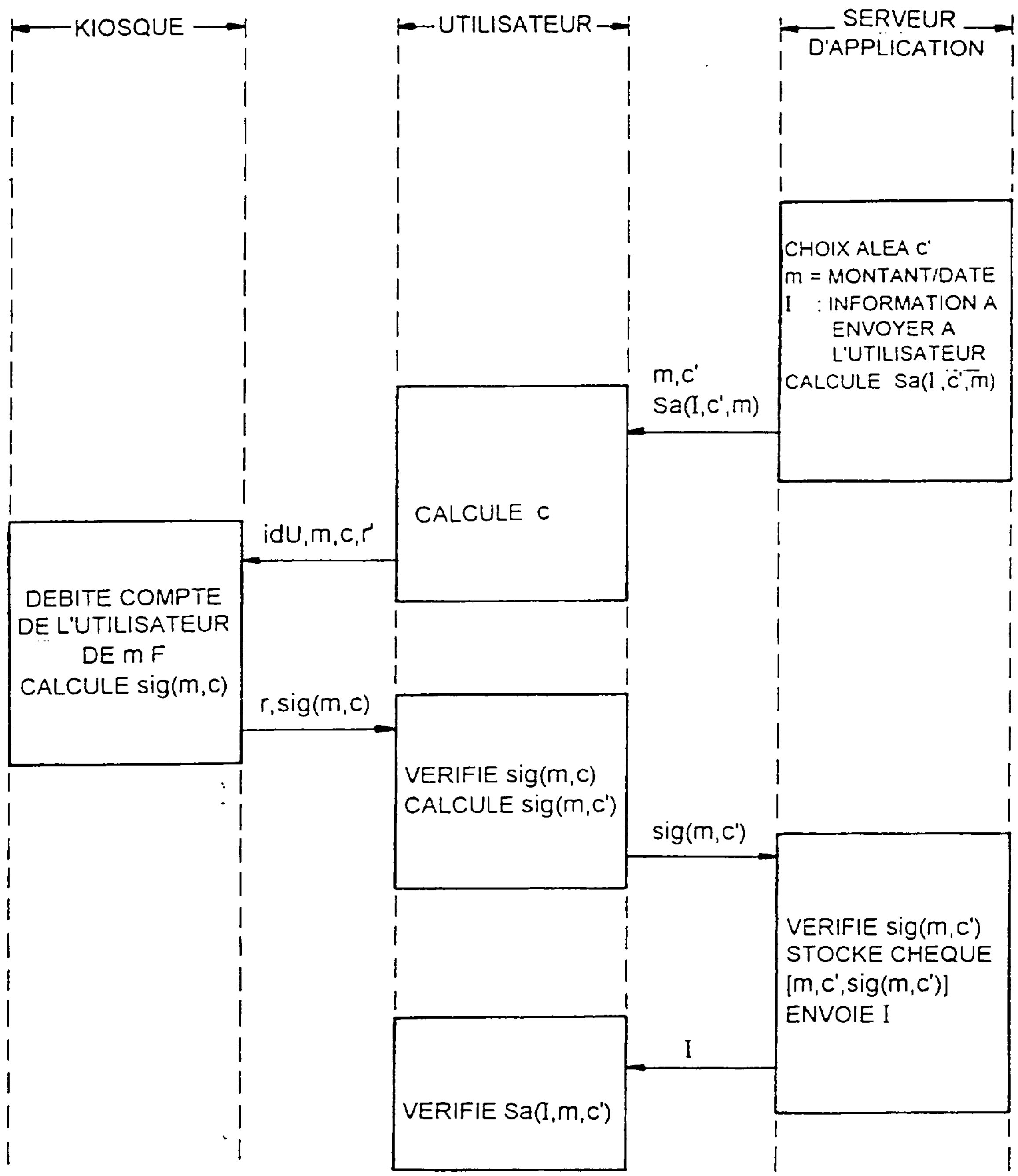
KIOSQUE
UTILISATEUR
SERVEUR D'APPLICATION
CHOIX ALEA c'
m = MONTANT/DATE
I : INFORMATION A ENVOYER A L'UTILISATEUR
CALCULE Sa(I,c',m)
m,c'
Sa(I,c',m)
CALCULE c
idU,m,c,r'
DEBITE COMPTE DE L'UTILISATEUR DE m F
CALCULE sig(m,c)
r,sig(m,c)
VERIFIE sig(m,c)
CALCULE sig(m,c')
sig(m,c')
VERIFIE sig(m,c')
STOCKE CHEQUE [m,c',sig(m,c')]
ENVOIE I
I
VERIFIE Sa(I,m,c')

FIG. 7